Europäisches Patentamt

European Patent Office

Office européen des brevets

(19)

(11) **EP 0 689 945 B1**

(12) **FASCICULE DE BREVET EUROPEEN**

(45) Date de publication et mention
de la délivrance du brevet:
**12.08.1998 Bulletin 1998/33**

(51) Int. Cl.⁶: $B60C\ 9/02$

(21) Numéro de dépôt: **95107861.7**

(22) Date de dépôt: **23.05.1995**

(54) **Pneumatique dont le renfort de carcasse est constitué à partir de bandelettes**

Reifen mit einer Karkasse bestehend aus Streifen

Tyre with a carcass reinforcement made from narrow strips

(84) Etats contractants désignés:
**BE DE ES FR GB IT LU NL**

(30) Priorité: **28.06.1994 FR 9408304**

(43) Date de publication de la demande:
**03.01.1996 Bulletin 1996/01**

(73) Titulaire: **SEDEPRO**
**F-75015 Paris (FR)**

(72) Inventeur: **Herbelleau, Yves**
**F-63200 Riom (FR)**

(74) Mandataire: **Bauvir, Jacques**
**Michelin & Cie,**
**Service SGD/LG/PI Ladoux**
**63040 Clermont-Ferrand Cedex 01 (FR)**

(56) Documents cités:
**EP-A- 0 465 187          DE-C- 650 886**
**FR-A- 446 749            FR-A- 472 846**
**FR-A- 2 141 834          FR-A- 2 614 582**
**GB-A- 992 631            US-A- 1 519 522**

## Description

La présente invention se rapporte aux pneumatiques. Plus particulièrement, elle concerne le renforcement de carcasse de ceux-ci.

Les pneumatiques sont renforcés par des fils (métalliques, en rayonne, en aramide, en polyester, en nylon etc...) disposés en nappes : nappe(s) de carcasse allant d'une tringle à l'autre, presque toujours de type radiale à l'heure actuelle, et nappe(s) de sommet constituant, avec la nappe de carcasse le renforcement de sommet appelé ceinture, plus parfois d'autres nappes jouant un rôle de renforcement ou de protection. A l'échelle industrielle, ces nappes sont préparées sous forme de produits semi-finis, caractérisés, du point de vue géométrique, par leur largeur, par l'angle que forment les fils par rapport à la direction longitudinale, et sont conditionnées sous forme de bobines. Ces bobines sont ensuite montée sur des machines d'assemblage pour la fabrication du pneumatique.

Pour assurer une excellente liaison mécanique du pneumatique à la roue, la nappe de carcasse est solidement ancrée dans le bourrelet du pneumatique. Pour assurer cet ancrage, différentes architectures sont possibles ; par exemple, on peut faire passer les fils par dessous une tringle, autour de laquelle ils sont retournés. On conviendra d'appeler "architecture" le plan et les données de fabrication donnant les différents constituants du pneumatique, leur nature et leur localisation précise à l'intérieur du pneumatique vulcanisé.

On connaît aussi certaines architectures de renforcement dans lesquelles un renforcement est réalisé directement à partir d'une seule bobine de fil, au moment de la confection du pneumatique. Ainsi, par exemple, il est devenu très courant de fretter les sommets des pneumatiques hautes vitesses par du fil disposé à zéro degré. Un tel renfort est réalisé par bobinage du fil sur le sommet du pneumatique. Un autre exemple est fourni par le brevet EP 0 582 196 dans lequel on propose de constituer le renforcement de carcasse à partir d'un fil faisant des allers et retours d'un bourrelet à l'autre du pneumatique, avec adjonction de fils bobinés circonférentiellement pour remplir la fonction de la tringle.

Enfin, pour atteindre les performances souhaitées, plusieurs mélanges de caoutchoucs doivent être formulés, selon qu'ils sont utilisés dans les bourrelets, dans les flancs, aux épaules ou au sommet, et selon l'endroit précis dans ces différentes parties. En effet, les performances des pneumatiques sont conditionnées aussi bien par les caoutchoucs utilisés que par les fils des renforts, et que par la disposition de ces derniers et leur matière.

Les pneumatiques ainsi conçus donnent d'excellents résultats quant à leurs performances sur les véhicules. Cependant, leur fabrication est toujours assez difficile et souvent coûteuse. L'objectif de la présente invention est de proposer un pneumatique qui, sans préjudice ni pour ses performances ni pour son uniformité, soit très économique à fabriquer, ne requiert que du matériel de fabrication très simple et très peu coûteux. Un autre but de l'invention est de proposer une technique de conception des renforcements par fils qui permette très facilement d'ajuster les caractéristiques de performance du pneumatique sans recourir à des formulations de mélange de caoutchouc de plus en plus sophistiquées.

Selon l'invention, le pneumatique renforcé par au moins une armature de carcasse présente au moins dans les flancs est caractérisé en ce que l'armature de carcasse comporte un arrangement circonférentiel de tronçons de fils disposés côte à côte et s'étendant transversalement par rapport à la direction circonférentielle, noyés dans une matrice en matériau élastomérique, ledit arrangement circonférentiel étant disposé de façon à ce que, lorsque l'on observe l'armature de carcasse en section radiale, lesdits tronçons de fil présentent au moins un certain recouvrement.

Lorsque l'on qualifie un arrangement ou une direction de "circonférentiel", on se réfère à une figure qui est sensiblement de révolution autour de l'axe de rotation du pneumatique : par exemple, un ensemble de cercles concentriques ou une spirale (dans les flancs), ou une hélice (sous la bande de roulement), centrés sur l'axe de rotation du pneumatique, peuvent former un arrangement circonférentiel au sens de la présente invention. Au sens de la présente invention, un "tronçon" est un morceau de fil limité en longueur par des coupes. C'est un morceau de longueur inférieure à la hauteur du flanc du pneumatique considéré.

Dans la présente invention, l'arrangement de tronçons de fil forme en vue d'ensemble des figures circulaires très sensiblement centrées sur l'axe de rotation du pneumatique. Cependant, les tronçons de fil dont il est question ici ne sont pas orientés circonférentiellement ; c'est leur arrangement, c'est à dire leur groupement dans un certain ordre qui est qualifié de circonférentiel. Dans le cas particulier d'un pneumatique radial, les tronçons sont orientés radialement, c'est à dire perpendiculairement à l'orientation de l'arrangement.

Suivant un exemple de réalisation de la présente invention, le pneumatique est caractérisé en ce que l'armature de carcasse est constituée d'une série de tours circonférentiels d'une bandelette constituée d'une matrice en matériau élastomérique renforcée par des fils disposés côte à côte et s'étendant transversalement dans ladite bandelette, les bandelettes étant disposées de façon à présenter, lorsqu'on les observe en section radiale, au moins un certain recouvrement. Ladite bandelette peut, lors de la fabrication du pneumatique, être bobinée par rotation du pneumatique autour de son axe. Elle est orientée circonférentiellement, au pas de bobinage près.

Dans le présent mémoire, on appelle "bandelette" un produit semi-fini ayant l'allure d'un ruban, comportant une matrice en matériau élastomérique dans laquelle sont disposés des fils de renforcement s'étendant transversalement dans ladite bandelette.

Dans une variante de réalisation de l'invention, l'armature de carcasse comporte en outre un renfort en câbles orientés circonférentiellement, disposé dans les flancs.

Dans le présent mémoire, le terme "fil" désigne en toute généralité aussi bien des monofilaments que des multifilaments, ou des assemblages comme des câbles, des retors ou bien encore n'importe quel type d'assemblage équivalent, et ceci, quels que soit la matière et le traitement de ces fils, par exemple traitement de surface ou enrobage ou préencollage pour favoriser l'adhésion sur le caoutchouc.

Les figures suivantes illustrent l'invention, de façon non limitative, et permettent de bien comprendre comment on peut la réaliser.

La figure 1 est une coupe partielle d'un pneumatique selon l'invention.
La figure 2 est une vue de face, perpendiculaire à la figure 1, montant seulement l'agencement du renfort de carcasse.
La figure 3 est une coupe radiale partielle d'une seconde variante de réalisation.
La figure 4 est une vue de face, perpendiculaire à la figure 3, montrant seulement l'agencement du renfort de carcasse.
La figure 5 est un agrandissement expliquant certains paramètres de l'invention.

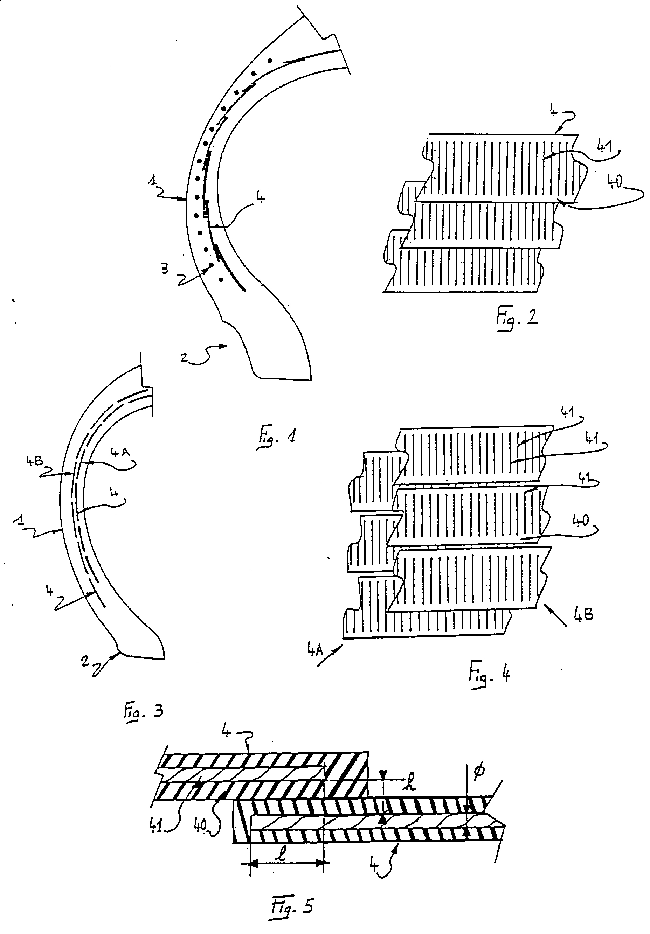

Les figures 1 et 2 illustrent le renforcement de carcasse seulement tel qu'il apparait dans un flanc 1 d'un pneumatique, pour simplifier la représentation de l'invention. Il va de soit cependant qu'une telle carcasse peut s'étendre vers et dans les bourrelets, et sous la bande de roulement du pneumatique.

L'armature de carcasse est constituée par une série de tours d'une bandelette 4, arrangés en hélice avec un léger recouvrement entre les bandelettes adjacentes. Il s'agit d'un enroulement circonférentiel réalisé aussi Lien dans les bourrelets et les flancs que dans le sommet du pneumatique. Le recouvrement permet d'assurer la continuité de la structure de renforcement depuis le sommet jusqu'aux bourrelets, en se déplaçant dans tout plan radial contenant l'axe de rotation du pneumatique. Notons qu'il suffit que ce recouvrement soit présent là où la continuité de l'armature de carcasse ne peut pas être assurée par d'autres moyens de renforcement, comme par exemple dans les flancs. Sous le sommet, la continuité de la structure de renforcement peut être assurée par les nappes de sommet, et au niveau des bourrelets, la continuité peut être assurée par d'autres nappes de renfort, le cas échéant.

La bandelette en elle-même est constituée d'une matrice 40 en matériau élastomérique renforcée essentiellement par des fils 41 disposés côte à côte, et s'étendant transversalement, c'est-à-dire sur l'essentiel de la largeur de la bandelette, autrement dit d'un bord à l'autre de la bandelette. Les fils 41 sont disposés selon l'angle voulu en fonction du pneumatique que l'on souhaite fabriquer. Pour réaliser un pneumatique à carcasse radiale, les fils sont bien entendu disposés perpendiculairement par rapport aux bords de la bandelette, comme cela apparait aux figures 2 et 4.

De préférence, le recouvrement respecte la relation conventionnelle suivante :

$$\frac{l}{\varnothing} \geq \sqrt{\frac{Ef}{Em}\frac{h}{\varnothing}}$$

où, comme cela est illustré à la figure 5, l est la longueur de recouvrement, $\varnothing$ est le diamètre du fil, Ef le module de Young des fils 41 de renforcement, Em le module de Young de la matrice en matériau élastomérique, h la distance entre fils de renforcement, correspondant à l'épaisseur du matériau élastomérique interposé entre les fils appartenant à des bandelettes différentes dans la zone de recouvrement. Les deux modules considérés sont ceux relevés à un niveau de déformation représentatif des sollicitations en service, à savoir à 2,5 % d'allongement.

La bandelette peut être fabriquée par exemple par la technique usuelle de préparation des nappes, à savoir coupe à l'angle voulu puis aboutage pour constituer des bobines prêtes à l'emploi, ou bien par tout autre moyen convenable. En utilisant une technique de coupe et aboutage, les fils s'étendent transversalement sur la totalité de la largeur de la bandelette, et leur section coupée apparaît sur les bords de la bandelette, contrairement à ce qui est montré aux figures 2, 4 et 5, dans lesquelles on voit que l'extrémité des tronçons de fil n'atteint pas le bord de la bandelette utilisée. Dans ce dernier cas, la largeur totale de la bandelette est supérieure à la largeur (projetée sur la direction perpendiculaire à la grande longueur de la bandelette) occupée par les fils de renforcement. Selon la technique de production des bandelettes, il peut y avoir éventuellement des fils de trame, n'ayant aucun rôle de renforcement.

Le pneumatique selon l'invention peut être fabriqué entièrement par bobinage autour de l'axe de rotation de ses divers constituants, comme on va l'expliquer ci-après, en adoptant pour cela une variante de réalisation de l'invention qui concerne spécifiquement l'exécution des bourrelets, et en adoptant le procédé qui va être indiqué.

Le pneumatique peut être réalisé sur un support imposant la forme de sa cavité intérieure, comme par exemple un noyau rigide démontable. D'autres types de support, par exemple des supports utilisant une membrane armée gonflable, peuvent être utilisés. On applique sur ce support, dans l'ordre requis par l'architecture finale, tous les constituants du pneumatique, qui sont disposés directement à leur place finale, sans subir de conformation à aucun moment de la confection. Le ou les renforts de carcasse sont obtenus par bobinage d'une ou plusieurs bandelettes, avec recouvrement, comme précisé ci-avant. Les renforts de sommet peuvent être obtenus par bobinage de bandelettes dont les fils forment l'angle voulu, avec ou sans recouvrement, comme cela apparaît aux figures 6 et 7 ou 10 et 11 dans le brevet US 1 894 237. L'ancrage de la carcasse dans les bourrelets peut être réalisé comme enseigné dans la demande de brevet EP 0 582 196. Les produits en caoutchouc sont obtenus par exemple par bobinage de rubans de caoutchouc. Notons encore que, en variante, les tronçons peuvent être projetés sur le support par un organe tel que décrit dans le brevet EP 0 248 301.

Pour assurer le recouvrement des bandelettes, on peut, comme représenté aux figures 1 et 2, faire chevaucher la bandelette posée à un tour donné sur la bandelette posée au tour précédent. C'est la pose par bobinage en hélice avec recouvrement d'une spire à l'autre. Les figures 3 et 4 illustrent une autre possibilité. On dispose une première couche 4A de bandelettes à bords adjacents les uns par rapport aux autres, puis on en dispose au moins une couche supplémentaire 4B, dans laquelle les bandelettes sont appliquées en quinconce par rapport aux bandelettes de la première couche 4A. C'est la pose par bobinage en hélice sans recouvrement, en au moins deux passes consécutives avec décalage dans le sens transversal, d'une passe à l'autre, pour obtenir le recouvrement nécessaire entre bandelettes.

Si l'on veut définir une forme qui soit différente de la forme d'équilibre naturelle d'une carcasse radiale gonflée, c'est-à-dire si l'on veut maîtriser parfaitement la forme du pneumatique lorsqu'il est gonflé sur une roue, on peut ajouter des fils à zéro degré 3 dans le flanc, ou au moins dans une partie importante de celui-ci, en densité de pose éventuellement variable, comme cela est illustré à la figure 1, sans que cela ne soit réservé à cette variante de réalisation.

Grâce aux moyens qui viennent d'être exposés, il est possible de faire varier très progressivement les caractéristiques du renforcement du pneumatique. Notamment, en adoptant un bourrelet sans tringle, renforcé par des fils 3 orientés circonférentiellement, la transition entre celui-ci et le flanc peut avoir toute la progressivité souhaitable. Il suffit de faire varier la densité de fils à zéro degré ou le taux de recouvrement des bandelettes pour régler certaines caractéristiques du comportement du pneumatique en modifiant les rigidités locales. On peut aussi choisir des fils 3 circonférentiels dans le flanc de nature différente des fils circonférentiels du bourrelet. Une autre façon de faire varier les caractéristiques renforçantes consiste à utiliser des fils de même nature, choisis de diamètres différents.

Par exemple, les fils 41 de carcasse sont en rayonne ou en polyester, les fils à zéro degré dans le bourrelet sont métalliques, et ceux 3 éventuellement ajoutés dans les flancs sont en aramide.

Le pneumatique proposé peut être réalisé entièrement par des opérations de bobinage sur support, de préférence sur un support dont la surface apparente, sur laquelle on bobine les éléments constitutifs du pneumatique, s'approche de, ou correspond à la forme intérieure du pneumatique. Ainsi, on limite, ou on supprime les opérations de conformation, de retournements de nappes ou autres. Il peut être réalisé en totalité à partir de rubans de caoutchoucs et de bandelettes armées, dont les dimensions ne dépendent pas des dimensions du pneumatique. Cela diminue considérablement le nombre de produits semi-finis, ce qui a une influence déterminante sur le prix de revient industriel.

**Revendications**

1. Pneumatique renforcé par au moins une armature dite de carcasse présente au moins dans les flancs dudit pneumatique, dans lequel l'armature de carcasse comporte un arrangement circonférentiel de tronçons de fils disposés côte à côte, lesdits tronçons ayant une longueur inférieure à la hauteur du flanc du pneumatique considéré, lesdits tronçons s'étendant transversalement par rapport à la direction circonférentielle, lesdits tronçons étant noyés dans une matrice en matériau élastomérique, ledit arrangement circonférentiel étant disposé de façon à ce que, lorsque l'on observe l'armature de carcasse en section radiale, lesdits tronçons de fil présentent au moins un certain recouvrement.

2. Pneumatique selon la revendication 1, caractérisé en ce que l'armature de carcasse est constituée d'une série de tours circonférentiels d'une bandelette (4) comportant une matrice en matériau élastomérique (40) renforcée par des fils (41) disposés côte à côte et s'étendant transversalement dans ladite bandelette, les bandelettes (4) étant disposées de façon à à présenter, lorsqu'on les observe en section radiale, au moins un certain recouvrement.

3. Pneumatique selon la revendication 1 ou 2, caractérisé en ce que le recouvrement respecte la relation suivante :

$$\frac{l}{\varnothing} \geq \sqrt{\frac{Ef}{Em}\,\frac{h}{\varnothing}}$$

où, l est la longueur de recouvrement, $\varnothing$ est le diamètre du fil, Ef le module de Young des fils (40) de renforcement, Em le module de Young de la matrice en matériau élastomérique, h la distance entre fils de renforcement, correspondant à l'épaisseur du matériau élastomérique interposé entre les fils appartenant à des bandelettes différentes dans la zone de recouvrement.

4. Pneumatique selon la revendication 2 ou 3, caractérisé en ce que le recouvrement est obtenu par un chevauchement de la bandelette (4) posée à un tour donné sur la bandelette (4) posée au tour précédent.

5. Pneumatique selon la revendication 2 ou 3, caractérisé en ce que la bandelette (4) posée à un tour donnée est disposée de façon adjacente à celle posée au tour précédent, sans chevauchement, et en ce que le recouvrement est obtenu par au moins une couche (4B) de bandelettes (4) supplémentaire, dans laquelle les bandelettes sont disposées en quinconce par rapport aux bandelettes (4) de la première couche (4A).

6. Pneumatique selon l'une des revendications 1 à 5, dans lequel les fils (41) sont orientés radialement.

7. Pneumatique selon la revendication 6, caractérisé en ce que l'armature de carcasse comporte en outre au moins une couche de fils orientés circonférentiellement (3), disposée dans les flancs.

## Claims

1. A tyre reinforced by at least one so-called carcass reinforcement present at least in the sidewalls of said tyre, in which the carcass reinforcement comprises a circumferential arrangement of lengths of cords arranged side by side, said lengths being of a length less than the height of the sidewall of the tyre in question, said lengths extending transversely with respect to the circumferential direction, said lengths being embedded in a matrix of elastomeric material, said circumferential arrangement being such that, when the carcass reinforcement is viewed in radial section, said lengths of cord exhibit at least a certain amount of overlap.

2. A tyre according to Claim 1, characterised in that the carcass reinforcement is formed of a series of circumferential turns of a strip (4) comprising a matrix of elastomeric material (40) reinforced by cords (41) arranged side by side and extending transversely in said strip, the strips (4) being arranged in such a manner as to exhibit, when viewed in radial section, at least a certain amount of overlap.

3. A tyre according to Claim 1 or 2, characterised in that the overlap respects the following relationship:

$$\frac{l}{\varnothing} \geq \sqrt{\frac{Ef}{Em} \frac{h}{\varnothing}}$$

in which l is the length of overlap, $\varnothing$ is the diameter of the cord, Ef the Young's modulus of the reinforcement cords (40), Em the Young's modulus of the matrix of elastomeric material, h the distance between reinforcement cords, corresponding to the thickness of the elastomeric material interposed between the cords belonging to different strips in the zone of overlap.

4. A tyre according to Claim 2 or 3, characterised in that the overlap is obtained by overlapping of the strip (4) laid in a given turn on the strip (4) laid in the preceding turn.

5. A tyre according to Claim 2 or 3, characterised in that the strip (4) laid in a given turn is arranged adjacent the one laid in the preceding turn, without overlap, and in that the overlap is obtained by at least one additional layer (4B) of strips (4) in which the strips are arranged staggered with respect to the strips (4) of the first layer (4A).

6. A tyre according to one of Claims 1 to 5, in which the cords (41) are oriented radially.

7. A tyre according to Claim 6, characterised in that the carcass reinforcement furthermore comprises at least one layer of circumferentially oriented cords (3), arranged in the sidewalls.

## Patentansprüche

1. Reifen, der durch mindestens einen Mantel verstärkt ist, der Karkassenmantel genannt wird und mindestens in den Flanken des Reifens vorliegt, worin der Karkassenmantel eine Umfangsanordnung aus Draht- bzw. Fadenstücken aufweist, die nebeneinanderliegend angeordnet sind, wobei die genannten Stücke eine Länge aufweisen, die kleiner ist als die Höhe der Flanke des in Betracht gezogenen Reifens, die genannten Stücke sich bezüglich der Umfangsrichtung in Querichtung erstrecken, die genannten Stücke in eine Matrix aus Elastomermaterial eingebettet sind und die genannte Umfangsanordnung derart eingerichtet ist, daß, wenn man den Karkassenmantel im Radialschnitt betrachtet, die genannten Draht- bzw. Fadenstücke mindestens eine gewisse Überdekkung aufweisen.

2. Reifen nach Anspruch 1, dadurch gekennzeichnet, daß der Karkassenmantel aus einer Reihe von Umfangs-Umläufen eines Streifens (4) gebildet ist, der eine Matrix aus Elastomermaterial (40) aufweist, die durch Drähte bzw. Fäden (41) verstärkt ist, die nebeneinanderliegend angeordnet sind und sich im genannten Streifen in Querrichtung erstrekken, wobei die Steifen (4) derart angeordnet sind, daß sie, wenn man sie im Radialschnitt betrachtet, mindestens eine gewisse Überdeckung aufweisen.

3. Reifen nach Anspruch 1 oder 2, dadurch gekennzeichnet, daß die Überdeckung die folgende Zuordnung erfüllt:

$$\frac{l}{\varnothing} \geq \sqrt{\frac{Ef}{Em}\frac{h}{\varnothing}}$$

worin l die Länge der Überdeckung ist, $\varnothing$ der Durchmesser des Drahtes bzw. Fadens ist, Ef der Elastizitätsmodul der Verstärkungsdrähte bzw. -fäden (40) ist, Em der Elastizitätsmodul der Matrix aus Elastomermaterial ist, und h der Abstand zwischen den Verstärkungsdrähten bzw. -fäden entsprechend der Dicke des Elastomermaterials ist, das zwischen den Drähten bzw. Fäden angeordnet ist, die in unterschiedlichen Streifen in der Überdeckungszone auftreten.

4. Reifen nach Anspruch 2 oder 3, dadurch gekennzeichnet, daß die Überdeckung durch eine Versetzung des Streifens (4) erhalten wird, der bei einem vorgegebenen Umlauf auf den Streifen (4) aufgelegt wird, der beim vorangehenden Umlauf verlegt wurde.

5. Reifen nach Anspruch 2 oder 3, dadurch gekennzeichnet, daß der Streifen (4), der bei einem vorgegebenen Umlauf verlegt wird, derart angeordnet ist, daß er ohne Überdeckung neben dem liegt, der beim vorangehenden Umlauf verlegt wurde, und daß die Überdeckung durch mindestens eine ergänzende Lage (4B) aus Streifen (4) erhalten wird, in der die Streifen in Bezug auf die Streifen (4) der ersten Lage (4A) versetzt sind.

6. Reifen nach einem der Ansprüche 1 bis 5, in dem die Drähte bzw. Fäden (41) radial ausgerichtet sind.

7. Reifen nach Anspruch 6, dadurch gekennzeichnet, daß der Karkassenmantel außerdem mindestens eine Lage aus Drähten bzw. Fäden (3) aufweist, die in Umfangsrichtung ausgerichtet sind und in den Flanken angeordnet sind.

Fig. 1

Fig. 2

Fig. 3

Fig. 4

Fig. 5